# EUROPÄISCHE PATENTSCHRIFT

(11) **EP 2 059 687 B1**
(45) Veröffentlichungstag und Bekanntmachung des Hinweises auf die Patenterteilung: **07.03.2012**
(21) Anmeldenummer: 07788541.6
(22) Anmeldetag: 28.08.2007
(51) Int. Cl.: F16B 43/00, F16B 33/00, F16B 35/06

(54) **SCHRAUBE UND DEREN KOMBINATION MIT EINER KONISCHEN DICHTSCHEIBE**
SCREW AND ITS COMBINATION WITH A CONICAL SEALING DISK
VIS ET SA COMBINAISON AVEC UNE RONDELLE D'ETANCHEITE CONIQUE

(30) Priorität: 06.09.2006 DE 102006041860
(43) Veröffentlichungstag der Anmeldung: 20.05.2009
(73) Patentinhaber: SFS intec Holding AG, 9435 Heerbrugg (CH)
(72) Erfinder: MAIR, Roland, A-6840 Götzis (AT)
(86) Internationale Anmeldenummer: PCT/EP2007/058898
(87) Internationale Veröffentlichungsnummer: WO 2008/028838

(56) Entgegenhaltungen:
- WO-A-86/00118
- US-A- 3 566 738
- US-B1- 6 854 942

## Beschreibung

Die Erfindung betrifft eine Kombination einer Schraube mit einem Schaft und einem Kopf mit einer auf dem Schaft bis an die Unterseite des Schraubenkopfes herangeführten oder heranführbaren ringförmigen, konischen Dichtscheibe.

Solche Kombinationen einer Schraube mit einer konischen Dichtscheibe sind beispielsweise bekannt aus dem Firmenprospekt topform Gewindeformbefestiger: Technische Dokumentation, SFS Stadler Befestigungstechnik Bau, CH-9435 Heerbrugg, BB.3.27.88.D, 1986. Bei der Schraube dieser Kombinationen ist die ringförmige Unterseite des Schraubenkopfes eine zu der Schraubenachse rechtwinkelige Fläche. Solche Kombinationen dienen zur Befestigung von Bauteilen auf einer dünnen Stahl- oder Aluminium-Unterkonstruktion oder allgemein zur Befestigung von Blech auf Blech oder von Blech auf Holz. Eine Schraube, wie sie bei den aus dem vorgenannten Firmenprospekt bekannten Kombinationen eingesetzt wird, ist auch in der US 6854942 B1 dargestellt, die sich von der in dem Prospekt dargestellten Schraube lediglich dadurch unterscheidet, dass unter dem Schraubenkopf noch ein spezielles zusätzliches Gewinde auf dem Schaft vorgesehen ist, mittels welchem sich die Dichtscheibe unter dem Schraubenkopf rechtwinkelig zur Achse des Schaftes halten lassen soll.

Zum Stand der Technik zählen auch Kombinationen mit einer Schraube, bei der die Unterseite des Kopfes konkav ausgebildet ist, damit sich eine Dichtscheibe aus Gummi sicherer zwischen Schraubenkopf und Unterlage festhalten lässt. Solche Kombinationen einer Schraube mit einer GummiDichtscheibe sind beispielsweise bekannt aus US 4875818, EP 1409881 B1 oder US 6789989 B2. Eine Einschlagschraube mit konkaver Schraubenkopfunterseite ist aus der EP 0243526 B1 bekannt. Durch die konkave Ausbildung der Schraubenkopfunterseite wird Raum geschaffen zur Aufnahme einer Ringaufbördelung, welche um eine Aufnahmebohrung in einem Abdeckblech od. dgl. vorgesehen ist, in die die Schraube eingeschlagen werden kann.

Kombinationen der eingangs genannten Art aus einer Schraube und einer ringförmigen, konischen Dichtscheibe werden bevorzugt für die Montage von Stahlprofiltafeln für Dach-, Wand- und Deckenkonstruktionen eingesetzt, wie es z. B. aus der IFBSINFO Richtlinie 8.01 vom Industrieverband zur Förderung des Bauens mit Stahlblech e.V., Ausgabe April 2002, bekannt ist. Laut dem Prospekt, Seite 10, bestehen die Dichtscheiben aus einem Metallrücken, auf den eine Elastomerschicht aus EPDM untrennbar aufvulkanisiert ist. Der Metallrücken ist üblicherweise 1,0 mm stark und besteht aus rostfreiem Stahl, Aluminium oder galvanisiertem Stahl. Die Elastomerschicht EPDM ist 2,0 oder 3,0 mm stark. Diese Dichtscheiben ergeben beim Anziehen der Schraube eine innere Dichtung am Schraubenschaft und eine äußere Dichtung an der Stelle, wo sie die Bewegungen von Blech od. dgl. aufnehmen müssen. Temperaturausdehnungen aus den Bauelementen und Verkehrslasten eines Bauwerks werden nach den Anforderungen aufgenommen. Die große Dichtfläche verhindert zugleich jeden Metall/Metall-Kontakt (galvanische Korrosion) und schützt Bauteile vor mechanischer Beschädigung durch Montagegeräte. Das alles kann nur einwandfrei funktionieren, wenn die Kombination aus Schraube und Dichtscheibe mit genau eingestelltem Tiefeneinschlag (wegabhängige Schraubgeräte) richtig gesetzt wird. Die Dichtscheiben sind unverlierbar auf die Schrauben montiert. Die Schrauben kommen als Kombination Schraube/Dichtscheibe gebrauchsfertig auf die Baustelle. Die oben genannte Richtlinie schreibt in diesem Zusammenhang vor (Seite 25), dass Schrauben mit Dichtscheibe tiefenanschlagorientiert einzuschrauben sind. Durch den Tiefenanschlag an den Schrauben soll eine unzulässige Verformung der Dichtscheibe (Unterlegscheibe mit Elastomer-Dichtung) verhindert werden. Die Schraube darf nämlich nur so weit angezogen werden, dass die Unterlegscheibe und die Elastomer-Dichtung gemäß den Herstellerangaben komprimiert ist. Leider sieht die Praxis so aus, dass solche Schrauben mit Dichtscheibe entgegen der Richtlinie ohne Tiefenanschlag gesetzt werden. Das führt dazu, dass die Schrauben entweder zu schwach oder zu stark angezogen werden. In dem vorgenannten Firmenprospekt ist das auf Seite 10 und in der vorgenannten Richtlinie auf Seite 25 gezeigt.

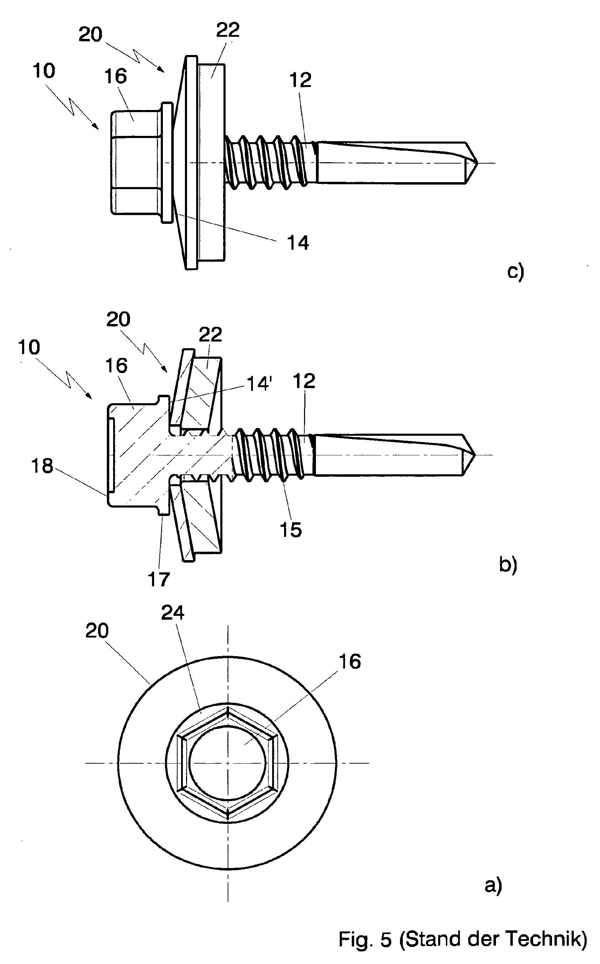

Ein besonderes Problem stellt der Fall dar, wenn die Schraube zu stark angezogen wird. Anhand der in beigefügter Fig. 5 (Stand der Technik) dargestellten Kombination aus Schraube und Dichtscheibe lässt sich das anschaulich zeigen. In Fig. 5 ist die Schraube insgesamt mit der Bezugszahl 10 und die Dichtscheibe insgesamt mit der Bezugszahl 20 bezeichnet. Die Dichtscheibe 20 ist gemäß der Darstellung in Fig. 5b auf einem Schaft 12 der Schraube bis an die Unterseite 14' eines Schraubenkopfes 16 herangeführt und ist auf einem Kreis am Innenumfang der ringförmigen Dichtscheibe 20 mit der Unterseite 14' in Linienberührung. In dieser Stellung wird die Dichtscheibe 20 durch eine Elastomer-Dichtung 22 auf dem Schaft 12 der Schraube 10 gehalten.

Bei dem Setzen der Schraube 10 wird aufgrund der Linienberührung zwischen dem Schraubenkopf 16 und der Dichtscheibe 20 auf die Dichtscheibe in der Nähe von deren Zentrum zuerst Druck ausgeübt. Aus der Linienberührung wird dann zunehmend eine Ringflächenberührung zwischen dem Schraubenkopf 16 und der Dichtscheibe 20.

Wenn, wie leider üblich, ohne Tiefenanschlag gearbeitet wird, wird durch den auf die Dichtscheibe 20 einwirkenden Druck des Schraubenkopfes 16 die Dichtscheibe schließlich in eine ebene Form gebracht, aus welcher sie in einer Schnappbewegung weiter in eine konische Form übergeht, deren Konus sich im Gegensatz zu dem ursprünglichen Konus, der sich nach oben verjüngt, nach unten verjüngt. Dieser Vorgang wird als "Schüsseln" bezeichnet, weil die Dichtscheibe eine Schüsselform annimmt. In dieser Position der Dichtscheibe 20 ist keine dichte Verbindung gewährleistet, weil der Schraubenkopf 16 nur am Außenumfang seines Bundes 17 auf der Oberseite der Dichtscheibe 20 aufliegt und weil die Elastomer-Dichtung der Dichtscheibe unzulässig verformt worden ist, so dass sie unter der Dichtscheibe hervorquillt und am Außenumfang des Schaftes nicht mehr ausreichend abdichtet. Wasser wird sich in der schüsselförmigen Dichtscheibe sammeln und schließlich seinen Weg unter den Schraubenkopf finden und sich an dem Schaft entlang nach unten ausbreiten, weil, wie gesagt, die Elastomer-Dichtung am Schaft nicht mehr richtig dichtet.

Besonders problematisch ist, dass die Kraft, die maximal auf den Schraubenkopf ausgeübt werden sollte, fast genau dem Wert entspricht, bei dem eine Tendenz zum Schüsseln besteht. Bei dieser Tendenz spielt das Vorhandensein der Elastomer-Dichtung 22 zwischen der Unterlage und der Dichtscheibe 20 eine große Rolle. Das Hinausschieben der Elastomer-Dichtung 22 über den Außenumfang der Dichtscheibe 20 fördert noch die Tendenz zum Schüsseln, weil die Abstützung am Innenumfang der Dichtscheibe 20 entsprechend geringer wird.

Die US 4292876 gibt an, dass bei einer Kombination aus Schraube und Dichtscheibe die Tendenz zum "Schüsseln" verringert werden kann, indem eine konische Dichtscheibe, bestehend aus einem Stahlring und einer Elastomer-Dichtung, verwendet wird, die ein höheres Drehmoment aushalten kann.

In der EP 0760431 A1 sind Probleme angesprochen, die auftreten, wenn in einer Kombination aus Schraube und Gummidichtscheibe bei dem Setzen der Schraube entweder zu wenig oder zu viel Druck auf die Gummidichtscheibe ausgeübt wird. Als eine Lösung für dieses Problem ist angegeben, das Drehmoment oder den Tiefenanschlag bei dem Setzwerkzeug so einzustellen, dass ein bestimmter Druck auf die Gummidichtscheibe nicht überschritten wird. Als eine andere Lösung, ist angegeben, die Gummidichtscheibe über Flansche zurückzuhalten.

Aus der US 5156509 ist es bekannt, bei einer Kombination aus einer Schraube und einer Dichtscheibe, bestehend aus einem Metallteil und einer elastischen Dichtung, die Dichtheit dadurch zu gewährleisten, dass das Metallteil und die Dichtung in einer Vertiefung angeordnet werden.

Schließlich ist es aus der US 2982573 bekannt, eine im Ausgangszustand konische Dichtscheibe aus Metall und eine daran befestigte Gummidichtung einzusetzen, die bei dem Anziehen der Schraube flachgedrückt werden. Zum Erzielen einer besseren Abdichtung hat die metallische Dichtscheibe an ihrem Außenrand einen Flansch, durch welchen die Gummidichtung zurückgehalten wird, wenn die metallische Dichtscheibe flachgedrückt wird.

Aufgabe der Erfindung ist es, eine Kombination der eingangs genannten Art so auszubilden, dass sich eine dichte Verbindung unterhalb des Schraubenkopfes sicherer gewährleisten lässt und dass insbesondere die Tendenz zum Schüsseln verringert wird.

Diese Aufgabe ist erfindungsgemäß bei einer Kombination der eingangs genannten Art dadurch gelöst, dass der Schraubenkopf an seiner Unterseite um den Schaft als ein Konus mit einem gegen eine Senkrechte zur Schraubenachse gemessenen Konuswinkel ausgebildet ist, der sich in Richtung zu der Oberseite des Schraubenkopfes verjüngt, und dass die Konuswinkel so gewählt sind, dass die Unterseite des Schraubenkopfes und der konische Metallring weitgehend komplementär ausgestaltet sind.

Die Schraube der erfindungsgemäßen Kombination macht die Abdichtung unter ihrem Kopf im Bereich der inneren Dichtung sicherer, weil bei dem Anziehen der Schraube zwischen dieser und der konischen Dichtscheibe ein Flächenkontakt besteht oder zumindest schneller als im Stand der Technik hergestellt wird und, was entscheidend ist, bei fertig gesetzter Schraube zwischen deren Kopf und der konischen Dichtscheibe auch aufrechterhalten wird. Da somit eine einmal vorhandene Flächenberührung zwischen Schraubenkopf und konischer Dichtscheibe nicht oder nicht wieder in eine Linienberührung zwischen denselben übergeht, ist die Tendenz zum Schüsseln wesentlich geringer als im Stand der Technik. Erfindungsgemäß wird dadurch zugleich auch eine unzulässige Verformung des Metallringes und der Elastomer-Dichtung der Dichtscheibe verhindert. Darüber hinaus ist die Kraft, die mit dem Schraubenkopf auf die Dichtscheibe ausgeübt werden kann, bis diese anfängt zu schüsseln, wobei diese Kraft nur unwesentlich kleiner ist als die Kraft, die Schüsseln hervorruft, bei der Schraube der erfindungsgemäßen Kombination wesentlich höher als im Stand der Technik. Bei der Kombination nach der Erfindung wird die Abdichtung zwischen Dichtscheibe und Unterlage sowie zwischen Dichtscheibe und Schraube sogar dann aufrechterhalten, wenn die Schraube schräg gesetzt ist. Die im gesetzten Zustand der Schraube zwischen deren Kopf und der konischen Dichtscheibe vorhandene gegenseitige flächige Berührung sorgt auch in diesem Fall dafür, dass eine zuverlässige Abdichtung an dieser Stelle vorhanden ist und aufrechterhalten wird.

Bei einer Kombination aus einer Schraube und einer konischen Dichtscheibe wie der nach Fig. 5 ist der Schraubenkopf an seinem Außenumfang mit einem ringförmigen Bund versehen, der radial über den Außenumfang vorsteht. Wenn der Durchmesser dieses Bundes vergrößert wird, wird eine Hebelwirkung, die zwischen der konischen Dichtscheibe und dem Bund des Schraubekopfes auftritt, geringer, womit auch die Tendenz zum Schüsseln geringer wird. Der Grund dafür dürfte sein, dass der Hebel, der zum Schüsseln führt, mit größer werdendem Bundaußendurchmesser immer kleiner wird.

Vorteilhafte Ausgestaltungen der Kombination nach der Erfindung bilden die Gegenstände der Unteransprüche.

Wenn in einer Ausgestaltung der Kombination nach der Erfindung der Konuswinkel der Unterseite des Schraubenkopfes einen Wert in einem Bereich von 5° bis 15° aufweist, eignet sich die Schraube der Kombination nach der Erfindung für die gängigen konischen Dichtscheiben, die einen Konuswinkel von üblicherweise 10° oder 15° haben.

Wenn in einer Ausgestaltung der Kombination nach der Erfindung der Konuswinkel der Dichtscheibe durch Anziehen der Schraube verkleinerbar ist, passt sich die Dichtscheibe beim Anziehen der Schraube der Form der Unterseite des Schraubenkopfes schließlich an und gewährleistet so die Dichtigkeit der herzustellenden dichten Verbindung.

Wenn in einer weiteren Ausgestaltung der Kombination nach der Erfindung der Konuswinkel der Unterseite des Schraubenkopfes gleich dem vor dem Anziehen der Schraube vorhandenen Konuswinkel der Dichtscheibe ist, eignet sich die Kombination insbesondere für die Verwendung von konischen Dichtscheiben, die beim Setzen der Schraube verformbar sind, also beispielsweise von Dichtscheiben aus Aluminium.

Wenn in einer weiteren Ausgestaltung der Kombination nach der Erfindung der Konuswinkel der Unterseite des Schraubenkopfes kleiner ist als der vor dem Anziehen der Schraube vorhandene Konuswinkel der Dichtscheibe, wird zwischen dem Schraubenkopf und der Dichtscheibe erst mit zunehmendem Anziehen der Schraube eine flächige Berührung und damit eine dichte Verbindung hergestellt.

Wenn in einer weiteren Ausgestaltung der Kombination nach der Erfindung der Konuswinkel der Unterseite des Schraubenkopfes um bis zu 5° und bevorzugt um 3° kleiner ist als der Konuswinkel der Dichtscheibe, kann der Konuswinkel der Dichtscheibe in einem gewissen Bereich variieren. Auf jeden Fall wird bei angezogener Schraube die angestrebte flächige Berührung zwischen Schraubenkopfunterseite und Dichtscheibenoberseite vorhanden sein.

Wenn in einer weiteren Ausgestaltung der Kombination nach der Erfindung der Konuswinkel der Dichtscheibe einen Wert in einem Bereich von 10° bis 15° und bevorzugt einen Wert von 10° oder 15° hat, handelt es sich um eine Dichtscheibe mit gängigem Konuswinkel, die mit einer Schraube kombiniert werden kann, bei der die Unterseite des Schraubenkopfes einen Konuswinkel mit einem Wert in einem Bereich von 5° bis 15° aufweist.

Wenn in einer weiteren Ausgestaltung der Kombination nach der Erfindung der Metallring auf seiner sich konisch erweiternden Unterseite mit einer Elastomer-Dichtung versehen ist, bei der es sich um eine Elastomer-Dichtung aus einem terpolymeren Elastomer (Gummi) und, vorzugsweise, aus einem Ethylen-Propylen-Dien-Kautschuk (EPDM) od.dgl. handelt, lässt sich ein flächiger gegenseitiger Kontakt zwischen Schraubenkopfunterseite und Dichtscheibenoberseite ungeachtet des Metalls, aus dem der konische Metallring der Dichtscheibe besteht, auf jeden Fall sicher herstellen.

Ausführungsbeispiele der Erfindung werden im Folgenden unter Bezugnahme auf die beigefügten Zeichnungen näher beschrieben. Es zeigt
- Fig.: 1 in den Fig. 1a-1c die Schraube einer ersten Ausführungsform der Kombination nach der Erfindung in Draufsicht, in einer teilweise aufgeschnittenen Längsseitenansicht bzw. in einer Längsseitenansicht,
- Fig. 2: eine Querschnittansicht einer gängigen konischen Dichtscheibe, die bei der Kombination mit der Schraube nach Fig. 1 einsetzbar ist,
- Fig. 3: in den Fig. 3a-3c die Schraube nach Fig. 1 in Kombination mit einer konischen Dichtscheibe in Draufsicht, in einer teilweise aufgeschnittenen Längsseitenansicht bzw. in einer Längsseitenansicht,
- Fig. 4: in einer teilweise aufgeschnittenen Teillängsseitenansicht eine zweite Ausführungsform der Kombination nach der Erfindung mit einer Dichtscheibe nach Fig. 2 und
- Fig. 5: in den Fig. 5a-5c eine zum Stand der Technik gehörende Kombination aus einer Schraube und einer konischen Dichtscheibe in Draufsicht, in einer teilweise aufgeschnittenen Längsseitenansicht bzw. in Längsseitenansicht.

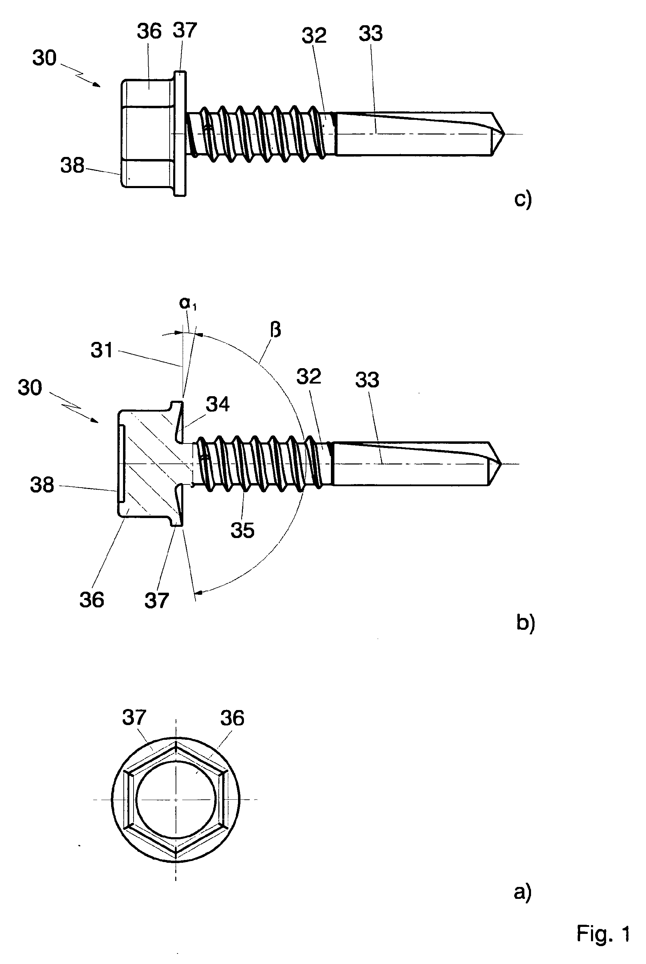

Fig. 1 zeigt in Draufsicht (Fig. 1a), in einer teilweise aufgeschnittenen Längsseitenansicht (Fig. 1b) und in einer Längsseitenansicht (Fig. 1 c) die Schraube einer ersten Ausführungsform der erfindungsgemäßen Kombination, die insgesamt mit der Bezugszahl 30 bezeichnet ist. Mit Ausnahme der Ausbildung der Unterseite 34 ihres Schraubenkopfes 36 gleicht die Schraube 30 der herkömmlichen Schraube 10 nach Fig. 5 in jeder Hinsicht. Es handelt sich in beiden Fällen um eine selbstbohrende, selbstgewindeschneidende Schraube, die wie üblich aus rostfreiem Stahl, aus verzinktem Stahl oder aus Aluminium besteht. Der Schraubenkopf 36 ist an seiner Unterseite 34 um den Schaft 32 als ein Konus ausgebildet, der sich in Richtung zu der Oberseite 38 des Schraubenkopfes 36 verjüngt. Der Konus der Unterseite 34 des Schraubenkopfes 36 hat einen gegen eine Senkrechte 31 zur Schraubenachse 33 gemessenen Konuswinkel α₁ mit einem Wert in einem Bereich von 5° bis 15° und in dem in Fig. 1b dargestellten Ausführungsbeispiel mit einem Wert von 10°. Die konische Unterseite 34 des Schraubenkopfes 36 bildet daher die Mantelfläche eines Kegelstumpfes mit einem Öffnungswinkel β von 160°. Der Schraubenkopf 36 hat an seinem Außenumfang einen radial überstehenden Bund 37.

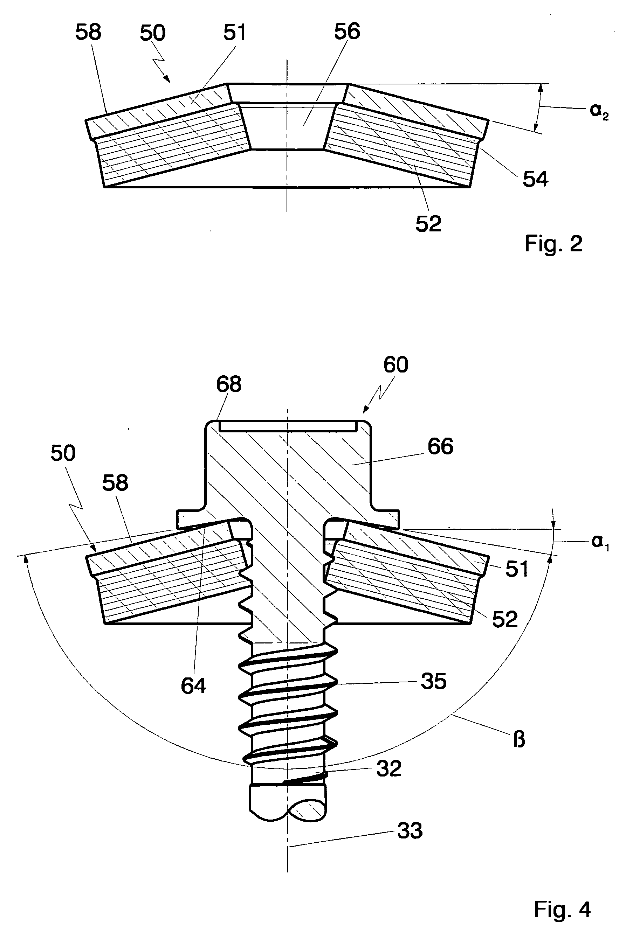

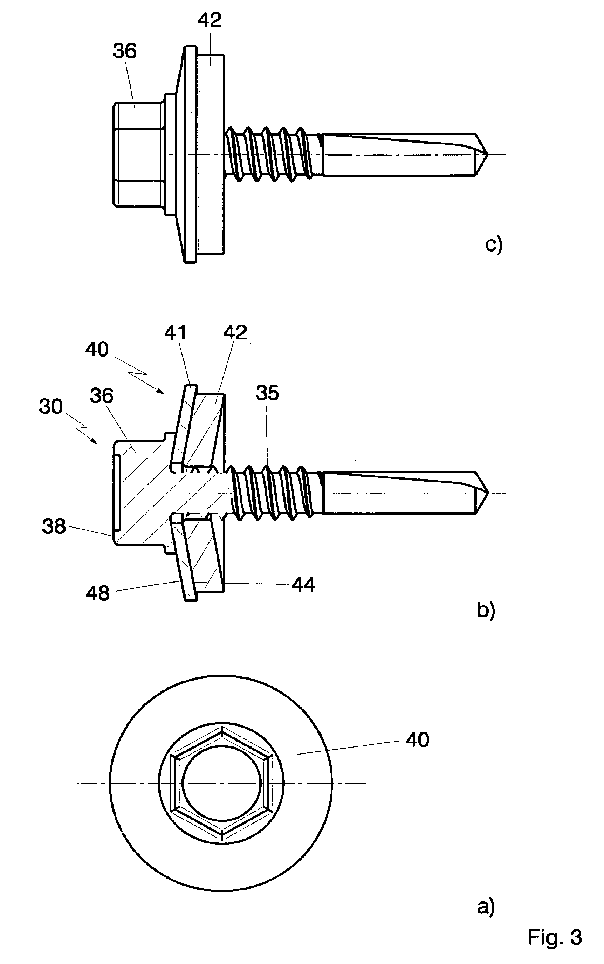

Weitere Einzelheiten der Schraube 30 sind für das Verständnis der Erfindung nicht von Bedeutung und werden daher nicht beschrieben. Die Schraube 30 dient zum Befestigen eines Bauteils (nicht dargestellt) auf einer Unterkonstruktion (nicht dargestellt) unter dichtem Anpressen einer konischen Dichtscheibe 40, die in einer Kombination mit der Schraube 30 in Fig. 3 gezeigt ist, auf welche nun Bezug genommen wird. Zugleich wird auf Fig. 2 Bezug genommen, die eine ähnliche konische Dichtscheibe als Einzelheit zeigt, welche mit 50 bezeichnet ist. Die konische Dichtscheibe 50 hat einen gegen eine Senkrechte 55 zur Scheibenachse 53 gemessenen Konuswinkel α₂. Bevor auf die Kombination nach Fig. 3 näher eingegangen wird, wird der grundsätzliche Aufbau einer konischen Dichtscheibe am Beispiel der Dichtscheibe 50 näher beschrieben.

Die Dichtscheibe 50 nach Fig. 2 ist ein konischer Metallring 51, der auf seiner dem zu befestigenden Bauteil (nicht dargestellt) zugewandten, sich konisch erweiternden Unterseite 54 mit einer Elastomer-Dichtung 52 versehen ist. Die Elastomer-Dichtung 52 kann aus einem terpolymeren Elastomer (Gummi) und bevorzugt aus einem Ethylen-Propylen-Dien-Kautschuk (EPDM) od. dgl. bestehen. Die Dichtscheibe 50 hat eine im Querschnitt kreisförmige mittige Öffnung 56, die den Schaft einer Schraube wie der Schraube 30 nach Fig. 1 aufnehmen kann. Die Elastomer-Dichtung ist durch Aufvulkanisieren mit der Unterseite 54 des Metallringes 51 fest verbunden worden. Die in Fig. 2 dargestellte Dichtscheibe 50 hat einen Konuswinkel α₂ von 10°. Stattdessen kann sie auch einen gängigen Konuswinkel α₂ von 15° haben. Der Konuswinkel α₂ kann auch einen Wert in dem Bereich von 10° bis 15° haben oder einen Wert, der etwas oberhalb oder unterhalb dieses Bereiches liegt. Die Dichtscheibe 50 ist durch Anziehen der Schraube mehr oder weniger verformbar, abhängig davon, aus welcher Art von Metall der Metallring 51 besteht, und abhängig von der Größe der Kraft, die durch den Schraubenkopf auf die Dichtscheibe 50 ausgeübt wird. In sämtlichen Figuren sind die Schrauben und die Dichtscheiben in einem Zustand gezeigt, in welchem die Schraube nicht angezogen ist.

Fig. 3 zeigt eine Kombination aus der Schraube 30 nach Fig. 1 und einer konischen Dichtscheibe 40 ähnlich der in Fig. 2 dargestellten. Fig. 3 zeigt die Kombination in Draufsicht (Fig. 3a), in einer teilweise aufgeschnittenen Längsseitenansicht (Fig. 3b) und in einer Längsseitenansicht (Fig. 3c). Die Dichtscheibe 40 unterscheidet sich von der Dichtscheibe 50 lediglich durch die etwas andere, für die Erfindung unwesentliche Ausbildung der Elastomer-Dichtung 42. In Fig. 3b ist die konische Dichtscheibe 40 an die Unterseite 34 des Kopfes herangeführt und wird in dieser Lage durch gegenseitige Berührung zwischen der Elastomer-Dichtung 42 und einem Gewinde 35 der Schraube 30 gehalten, so lange die Kombination noch nicht im Einsatz ist. Der Konuswinkel α₂ der konischen Dichtscheibe 40 und Konuswinkel α₁ der Unterseite 34 des Schraubenkopfes 36 sind gleich, so dass gemäß der Darstellung in Fig. 3b die Schraubenkopfunterseite 34 und die Oberseite 48 der konischen Dichtscheibe 40 in gegenseitiger Flächenberührung sind. Diese Flächenberührung bleibt im Wesentlichen auch erhalten, wenn die Schraube 30 angezogen wird. Das setzt voraus, dass die Dichtscheibe 40 aus einem Material besteht, dass nicht leicht verformbar ist, also zum Beispiel aus Stahl.

Wenn auf eine konische Dichtscheibe große Kräfte ausgeübt werden oder wenn die konische Dichtscheibe, wie vorstehend erwähnt, aus einem Metall besteht, das ermöglicht, dass die Dichtscheibe bei dem Anziehen der Schraube in einen etwas flacheren konischen Zustand gedrückt wird, ist es zweckmäßig, eine Schraube einzusetzen, bei welcher der Konuswinkel α₁ der Unterseite des Schraubenkopfes kleiner ist als der Konuswinkel α₂ der Dichtscheibe. Ein Ausführungsbeispiel dafür ist in Fig. 4 gezeigt, auf das nun näher eingegangen wird.

Fig. 4 zeigt eine Schraube 60, deren Kopf 66 eine Unterseite 64 hat, deren Konuswinkel α₁ kleiner als der Konuswinkel α₂ der Dichtscheibe 50 nach Fig. 2 ist, die in der Kombination nach Fig. 4 eingesetzt wird. Die Dichtscheibe 50 hat einen Konuswinkel α₂ von 10°. Hingegen hat die Unterseite 64 des Schraubenkopfes 66 einen Konuswinkel α₁ von etwa 5° bis 7°. Daher hat der Konus des Schraubenkopfes 66 einen Öffnungswinkel β von 166° bis 170°. Bei dem Anziehen der Schraube 60 wird der Konuswinkel α₂ der Dichtscheibe 50 verkleinert, bis die Oberseite 48 des Metallringes 51 der Dichtscheibe 50 und die Unterseite 64 des Schraubenkopfes 66 in gegenseitiger Flächenberührung sind. In dem in Fig. 4 dargestellten Ausgangszustand, in welchem die Schraube 60 noch nicht angezogen ist, ist die Dichtscheibe 50 mit der Unterseite 64 des Schraubenkopfes 66 auf einem Kreis in Linienberührung. Der Konuswinkel α₂ der Dichtscheibe 50, der vor dem Anziehen der Schraube 60 größer ist als der Konuswinkel α₁ der Unterseite des Schraubenkopfes 66, wird bei dem Anziehen der Schraube 60 gleich dem Konuswinkel α₁ der Unterseite des Schraubenkopfes 66, weil er bei dem Anziehen der Schraube 60 entsprechend verkleinert wird.

## Patentansprüche

1. Kombination einer Schraube mit einem Schaft und einem Kopf mit einer auf dem Schaft bis an die Unterseite des Schraubenkopfes herangeführten oder heranführbaren ringförmigen, konischen Dichtscheibe zum Befestigen eines Bauteils auf einer Unterkonstruktion unter dichtem Anpressen der konischen Dichtscheibe an das Bauteil, wobei die Dichtscheibe ein konischer Metallring ist, der einen gegen eine Senkrechte zur Scheibenachse gemessenen Konuswinkel hat und auf seiner dem zu befestigenden Bauteil zugewandten, sich konisch erweiternden Unterseite mit einer Elastomer-Dichtung versehen ist,
**dadurch gekennzeichnet, dass** der Schraubenkopf (36, 66) an seiner Unterseite (34, 64) um den Schaft (32) als ein Konus mit einem gegen eine Senkrechte (31) zur Schraubenachse (33) gemessenen Konuswinkel (α₁) ausgebildet ist, der sich in Richtung zu der Oberseite (38, 68) des Schraubenkopfes (36, 66) verjüngt, und dass die Konuswinkel (α₁, α₂) so gewählt sind, dass die Unterseite (34, 64) des Schraubenkopfes (36, 66) und der konische Metallring (41, 51) weitgehend komplementär ausgestaltet sind.

2. Kombination nach Anspruch 1, **dadurch gekennzeichnet, dass** der Konuswinkel (α₁) der Unterseite (34, 64) des Schraubenkopfes (36, 66) einen Wert in einem Bereich von 5° bis 15° aufweist.

3. Kombination nach Anspruch 1 oder 2, **dadurch gekennzeichnet, dass** der Konuswinkel (α₂) der Dichtscheibe (40, 50) durch Anziehen der Schraube (30, 60) verkleinerbar ist.

4. Kombination nach einem der Ansprüche 1 bis 3, **dadurch gekennzeichnet, dass** der Konuswinkel (α₁) der Unterseite (34, 64) des Schraubenkopfes (36, 66) gleich dem vor dem Anziehen der Schraube (30, 60) vorhandenen Konuswinkel (α₂) der Dichtscheibe ist.

5. Kombination nach einem der Ansprüche 1 bis 3, **dadurch gekennzeichnet, dass** der Konuswinkel (α₁) der Unterseite des Schraubenkopfes (36, 66) kleiner ist als der vor dem Anziehen der Schraube (30, 60) vorhandene Konuswinkel (α₂) der Dichtscheibe (40, 50).

6. Kombination nach Anspruch 5, **dadurch gekennzeichnet, dass** der Konuswinkel (α₁) der Unterseite (34, 64) des Schraubenkopfes (36, 66) um bis zu 5° und bevorzugt um 3° kleiner ist als der Konuswinkel (α₂) der Dichtscheibe (40, 50).

7. Kombination nach einem der Ansprüche 1 bis 6, **dadurch gekennzeichnet, dass** der Konuswinkel (α₂) der Dichtscheibe einen Wert in einem Bereich von 10° bis 15° und bevorzugt einen Wert von 10° oder 15° hat.

8. Kombination nach einem der vorhergehenden Ansprüche, **dadurch gekennzeichnet, dass** die Elastomer-Dichtung (42, 52) aus einem terpolymeren Elastomer (Gummi) und, vorzugsweise, aus einem Ethylen-Propylen-Dien-Kautschuk (EPDM) od. dgl. besteht

## Claims

1. A combination of a screw with a shank and a head with an annular conical sealing washer on the shank which is guided or can be guided up to the underside of the screw head for fastening a component to a substructure under a tight application of the conical sealing washer against the component, wherein the sealing washer is a conical metal ring, which has a cone angle measured with reference to a line perpendicular to the washer axis, and on its conically widening underside facing the component to be fastened is provided with an elastomer seal, **characterised in that** on its underside (34,64) the screw head (36,66) is formed around the shank (32) as a cone having a cone angle (∀₁) which, measured with reference to a line (31) perpendicular to the screw axis (33), tapers towards the upper side (38,68) of the screw head (36,66), and **in that** the cone angles (∀₁,∀₂) are chosen so that the underside (34,64) of the screw head (36,66) and the conical metal ring (41,51) are configured to be largely complementarily.

2. A combination according to Claim 1, **characterised in that** the cone angle (∀₁) of the underside (34,64) of the screw head (36,66) has a value in the range of from 5° to 15°.

3. A combination according to Claim 1 or 2, **characterised in that** the cone angle (∀₁) of the sealing washer (40,50) can be decreased by tightening the screw (30,60.)

4. A combination according to any one of Claims 1 to 3, **characterised in that** the cone angle (∀₁) of the underside (34,64) of the screw head (36,66) is equal to the cone angle (∀₂) of the sealing washer prevailing before the tightening of the screw (30,60).

5. A combination according to any one of Claims 1 to 3, **characterised in that** the cone angle (∀₁) of the underside of the screw head (36,66) is smaller than the cone angle (∀₂) of the sealing washer (40,50) prevailing before the tightening of the screw (30,60).

6. A combination according to Claims 5, **characterised in that** the cone angle (∀₁) of the underside (34,64) of the screw head (36,66) is smaller by up to 5° and preferably by 3° than the cone angle (∀₂) of the sealing washer (40,50).

7. A combination according to any one of the Claims 1 to 6, **characterised in that** the cone angle (∀₂) of the sealing washer has a value in a range of from 10° to 15° and preferably a value of 10° or 15°.

8. A combination according to any one of the preceding Claims, **characterised in that** the elastomer seal (42,52) comprises a terpolymer elastomer (rubber) and, preferably, an ethylene-propylene-diene rubber (EPDM) or the like.

## Revendications

1. Combinaison d'une vis ayant une tige et une tête avec une rondelle d'étanchéité, conique, engagée sur la tige jusque contre le côté inférieur de la tête de vis ou susceptible d'être conduite dans cette position, pour fixer une pièce à une infrastructure en pressant de manière étanche la rondelle d'étanchéité de forme conique contre la pièce,
* la rondelle d'étanchéité étant une bague métallique conique ayant un angle de cône mesuré par rapport à la perpendiculaire à l'axe de la rondelle et dont la face inférieure qui s'élargit de manière conique, tournée vers la pièce à fixer, étant munie d'un joint en éla.s-tomère,
combinaison **caractérisée en ce que**
la tête de vis (36, 66) a une face inférieure (34, 64) formant par rapport à l'axe (32) un cône avec un angle de cône (α₁) mesuré par rapport à une perpendiculaire (31) à l'axe de vis (33) qui va en diminuant en direction du côté supérieur (38, 68) de la tête de vis (36, 66), et
les angles des cônes (α₁, α₂) sont choisis pour que la face inférieure (34, 64) de la tête de vis (36, 66) et l'anneau métallique conique (41, 51) soit de forme très largement complémentaire.

2. Combinaison selon la revendication 1,
combinaison **caractérisée en ce que**
l'angle du cône (α₁) de la face inférieure (34, 64) de la tête de vis (36, 66) a une valeur située dans une plage comprise entre 5° et 15°.

3. Combinaison selon les revendications 1 ou 2,
**caractérisée en ce que**
l'angle du cône (α₂) de la rondelle d'étanchéité (40, 50) peut être diminué par le serrage de la vis (30, 60).

4. Combinaison selon l'une des revendications 1 à 3,
**caractérisée en ce que**
l'angle du cône (α₁) de la face inférieure (34, 64) de la tête de vis (36, 66) est égal à l'angle du cône (α₂) de la rondelle d'étanchéité existant avant le serrage de la vis (30, 60).

5. Combinaison selon l'une des revendications 1 à 3,
**caractérisée en ce que**
l'angle du cône (α₁) de la face inférieure de la tête de vis (36, 66) est inférieur à l'angle du cône (α₂) de la rondelle d'étanchéité (40, 50) qui existait avant le serrage de la vis (30, 60).

6. Combinaison selon la revendication 5,
**caractérisée en ce que**
l'angle du cône (α₁) de la face inférieure (34, 64) de la tête (36, 66) est inférieur jusqu'à 5°, de préférence de 3° à l'angle du cône (α₂) de la rondelle d'étanchéité (40, 50).

7. Combinaison selon l'une des revendications 1 à 6,
**caractérisée en ce que**
l'angle du cône (α₂) de la rondelle d'étanchéité a une valeur de l'ordre de 10° à 15°, de préférence une valeur égale à 10° ou 15°.

8. Combinaison selon l'une des revendications précédentes,
**caractérisée en ce que**
le joint en élastomère (42, 52) est en un élastomère polymère (caoutchouc) ou de préférence un caoutchouc éthylène-propylène-diène (EPDM) ou analogue.
